# EUROPEAN PATENT APPLICATION

(11) **EP 2 368 749 A2**
(43) Date of publication of application: **28.09.2011**
(21) Application number: 11002514.5
(22) Date of filing: 25.03.2011
(51) Int. Cl.: B60L 11/18

(54) **Power supply device having precharging function**

(30) Priority: 27.03.2010 JP 2010073917
(71) Applicant: Sanyo Electric Co., Ltd., Osaka 570-8677 (JP)
(72) Inventor: Kohara, Takashi, Moriguchi-shi Osaka, 570-8677 (JP); Nakano, Shinya, Moriguchi-shi Osaka, 570-8677 (JP)
(74) Representative: Hertz, Oliver

(57) **Abstract**

A power supply device includes a battery 1, an output switch 2 connecting the battery 1 to a load 20, and a control circuit 3 controlling the output switch 2. The output switch 2 is a semiconductor switching element 11 having controllable ON resistance. In the power supply device, the ON resistance of the semiconductor switching element 11 is controlled by the control circuit 3 so that the ON resistance in a precharge state is set larger than the ON resistance in an electrically-conducted state. The parallel capacitor 23 of the load 20 is precharged in the precharge state. After the parallel capacitor 23 of the load 20 is precharged, the load 20 is supplied with power from the battery 1 with the semiconductor switching element 11 being brought into the electrically-conducted state in which the ON resistance of the semiconductor switching element 11 is smaller than the precharge state.

## Description

### BACKGROUND OF THE INVENTION

### 1. Field of the Invention

The present invention relates to a power supply devices such as vehicle power supply device that connects a driving battery for driving a vehicle to a vehicle-side load through an output switch, and in particular to a power supply device that, after precharging a parallel capacitor of a vehicle-side load, brings an output switch into an electrically-conducted state and supplies electric power from a driving battery to the vehicle-side load.

### 2. Description of the Related Art

Vehicle power supply devices have a relay connected to the output side of a driving battery. In the power supply devices, the relay is turned ON so that the driving battery is connected the vehicle side. The relay is turned OFF, when the vehicle is out of operation, for example, when the car ignition switch is turned OFF. Also, if the car crashes, the relay will be turned OFF so that the output of the battery is cut off whereby improving the safety of the car.

A vehicle-side load to be connected to the vehicle power supply device is connected to a large capacitance parallel capacitor. The reason is to supply a large momentary amount of electric power by discharging electric charge stored in the parallel capacitor. The parallel capacitor is charged by the driving battery. Since the parallel capacitor has large capacitance, the charging current of the parallel capacitor will be very large when the parallel capacitor is completely discharged. Accordingly, when the relay is turned ON with the parallel capacitor being discharged, a very large amount of charge current will momentarily flow through the relay. This may cause damage to the contact of the relay. In particular, a large amount of charge current may melt and close the contact of the relay. If the contact is closed when melting, the relay cannot be turned OFF so that the driving battery cannot be disconnected from the load. In order to prevent this disadvantage, a power supply device has been developed that includes a precharge circuit for precharging a parallel capacitor before a relay is turned ON.

See Japanese Patent Laid-Open Publication No. 2000-253570.

The vehicle power supply device disclosed in Japanese Patent Laid-Open Publication No. 2000-253570 includes the precharge circuit, which previously charges the parallel capacitor. The precharge circuit is connected to the relay on the positive side in parallel. The precharge circuit is a series circuit of a diode and a MOSFET for limiting precharge current flowing into the parallel capacitor. In this precharge circuit, the parallel capacitor is precharged with the MOSFET limiting the precharge current for charging the parallel capacitor. After the precharging operation of the parallel capacitor is completed, the relay is turned ON so that the driving battery is connected to the vehicle-side load via the relay.

The aforementioned vehicle power supply device is required to include the MOSFET for limiting the precharge current when the parallel capacitor is precharged. On the other hand, the precharge current into the parallel capacitor is considerably large. In addition, the voltage of the driving battery is high. For this reason, an expensive FET is required that can operate at high voltage and a large amount of current. As a result, the component cost will be high.

The present invention has been developed for solving this disadvantage. It is an important object of the present invention to provide a power supply device that is not required to include a special purpose semiconductor switching element such as high-current FET for precharging a parallel capacitor but can connect a battery to a load after precharging the parallel capacitor by using an element for connecting the battery to the load.

### SUMMARY OF THE INVENTION

A power supply device according to the present invention includes a battery 1, an output switch 2 that connects the battery 1 to a load 20 including a parallel capacitor 23, and a control circuit 3 that controls the output switch 2. The output switch 2 is a semiconductor switching element 11 having controllable ON resistance. In the power supply device, the ON resistance of the semiconductor switching element 11 is controlled by the control circuit 3 so that the ON resistance in a precharge state is set larger than the ON resistance in an electrically-conducted state. The parallel capacitor 23 of the load 20 is precharged in the precharge state. After the parallel capacitor 23 of the load 20 is precharged, the load 20 is supplied with electric power from the battery 1 with the semiconductor switching element 11 being brought into the electrically-conducted state in which the ON resistance of the semiconductor switching element 11 is smaller than the precharge state.

According to the power supply device, although it is not necessary to provide a special purpose semiconductor switching element such as high-current FET for precharging a parallel capacitor, a battery can be connected to a load after the parallel capacitor is precharged by using an element for connecting the battery to the load. In particular, since the semiconductor switching element has controllable ON resistance, the power supply device has a feature that the parallel capacitor can be precharged in ideal conditions.

In the power supply device according to the present invention, the semiconductor switching element 11 is an element that allows current to flow in directions that the electric power is supplied from the battery 1 to the load 20 and from the load 20 to the battery 1 in the electrically-conducted state.
The power supply device has a feature that the battery can be charged/discharged through one semiconductor switching element.

In the power supply device according to the present invention, the control circuit 3 changes the ON resistance of the semiconductor switching element 11 continuously or in a stepped manner when the parallel capacitor 23 of the load 20 is precharged.
The power supply device has a feature that the parallel capacitor can be precharged with heat generation in the semiconductor switching element being controlled.

In the power supply device according to the present invention, the control circuit 3 gradually reduces the ON resistance of the semiconductor switching element 11 when the parallel capacitor 23 of the load 20 is precharged.
According to the power supply device, the parallel capacitor can be quickly precharged with heat generation in the semiconductor switching element being limited.

In the power supply device according to the present invention, the control circuit 3 includes a voltage detecting circuit 4 that detects the voltage of the parallel capacitor 23 of the load 20. The ON resistance of the semiconductor switching element 11 is controlled based on the parallel capacitor voltage detected by the voltage detecting circuit 4.
According to the power supply device, even in the case where electric charge remains in the parallel capacitor, the parallel capacitor can be precharged in suitable conditions.

In the power supply device according to the present invention, in the case where the parallel capacitor voltage detected by the voltage detecting circuit 4 is low, the ON resistance is controlled smaller than in the case where the parallel capacitor voltage is high.
According to the thus-constructed power supply device, in the case where the amount of residual electric charge is small in the parallel capacitor, it is possible to quickly precharged the parallel capacitor with a small amount of residual electric charge similarly to the parallel capacitor with a large amount of residual electric charge.

In the power supply device according to the present invention, the control circuit 3 includes a temperature detecting circuit 6 that detects the temperature of the semiconductor switching element 11. When the parallel capacitor 23 of the load 20 is precharged, the control circuit 3 controls the ON resistance so that, in the case where the temperature detected by the temperature detecting circuit 6 is high, the ON resistance is set larger than in the case where the detected temperature is low.
According to the power supply device, the parallel capacitor can be quickly precharged with the semiconductor switching element being prevented from overheating. In particular, even if the ignition switch is frequently switched between ON and OFF so that the parallel capacitor is repeatedly precharged, it is possible to prevent overheat malfunctions of the semiconductor switching element.

In the power supply device according to the present invention, the semiconductor switching element 11 and the relay 7 are connected to the output side of the driving battery 1. When the battery 1 is connected to the load 20, the control circuit 3 turns the semiconductor switching element 11 ON with the relay 7 being brought in the ON state.
Since the battery is connected to the load through both the relay and the semiconductor switching element, the power supply device has a feature that, even if one of the semiconductor switching element and the relay malfunctions and held in the ON state, the other of the semiconductor switching element and the relay can be turned OFF so that the battery can be disconnected from the load. The semiconductor switching element and the relay do not have the same mechanism that leads malfunctions. For this reason, there is a low probability that both the semiconductor switching element and the relay malfunction at the same time. Therefore, it is possible to greatly improve the safety.

In the power supply device according to the present invention, the semiconductor switching element is connected to the negative side of the battery 11, and the relay 7 is connected to the positive side of the battery 1.
Also, according to the power supply device, even if the semiconductor switching element malfunctions and is held in the ON state, the relay can be turned OFF so that the positive side of the battery can be disconnected from the load. In addition, since the semiconductor switching element is connected to the negative side of the battery, it is possible to simplify the control circuit, which switches the semiconductor switching element between ON and OFF. The reason is that a signal for controlling the semiconductor switching element can be provided relative to the ground potential to the semiconductor switching element.

In the power supply device according to the present invention, the semiconductor switching element is connected to the positive side of the battery, and the relay is connected to the negative side of the battery.
Also, according to the power supply device, even if the semiconductor switching element malfunctions and is held in the ON state, the relay can be turned OFF so that the negative side of the battery can be disconnected from the load.

A power supply device according to the present invention includes a battery 1, an output switch 2 that connects the battery 1 to a load 20 including a parallel capacitor 23, and a control circuit 3 that controls the output switch 2. The output switch 2 includes a main switch 9 that is connected in parallel to the precharge circuit 8 for precharging the parallel capacitor 23. In the power supply device, the precharge circuit 8 is a series circuit of a precharge resistor 12 and a thyristor 14. The control circuit 3 turns the thyristor 14 ON to precharge the parallel capacitor 23, and then turns the main switch 9 ON.

The thyristor can be turned ON when being provided with a pulse-type trigger signal, and after that is not necessarily provided with a control signal for holding the thyristor in the ON state. For this reason, in the power supply device that precharges the parallel capacitor through the thyristor, which is turned ON based on the trigger signal, the parallel capacitor can start being precharged by using a simplified circuit. In addition, the thyristor will be automatically turned OFF without being provided with a signal for turning the thyristor OFF when current stops flowing. When the parallel capacitor is fully precharged, the charge current stops flowing. Accordingly, the thyristor will be automatically turned OFF without being provided with a control signal for turning the thyristor OFF when the charge current stops flowing. Therefore, the power supply device can precharge the parallel capacitor by means of a simplified circuit that controls ON/OFF of the thyristor.
In addition, since high-voltage and large-current resistance thyristors can be inexpensively manufactured as compared with high-voltage and large-current resistance FETs and the like, the battery can be connected to the load by using components that can be manufactured at low cost. In addition, since thyristors do not have a movable contact, it is possible to provide effects that the power supply device can have high reliability and long life, and can be stably used.

A power supply device according to the present invention includes a battery 1, an output switch 2 that connects the battery 1 to a load 20 including a parallel capacitor 23, and a control circuit 3 that controls the output switch 2. The output switch 2 includes a main switch 9 that is connected in parallel to the precharge circuit 8 for precharging the parallel capacitor 23. The precharge circuit 8 is a series circuit of a precharge resistor 12 and a precharge switch 13, and the main switch 9 is a thyristor 14.

In the power supply device, when the ignition switch as main switch is turned ON and the parallel capacitor is then precharged, the thyristor can be turned ON so that the battery is connected to the load. The thyristor will be automatically turned OFF if current does not flow through the load. The thyristor can be brought in the ON state by providing a trigger signal periodically at a certain cycle. In addition, since the thyristor will be automatically turned OFF if current does not flow through the load, the thyristor can be turned OFF if not provided with the trigger signal. For this reason, the circuit can be simplified which controls ON/OFF of the thyristor.

In addition, since high-voltage and large-current resistance thyristors can be inexpensively manufacture as compared with high-voltage and large-current resistance FETs and the like, the battery can be connected to the load by using components that can be manufactured at low cost. In particular, in the power supply device that includes the thyristor as output switch for connecting the battery to the load, there is a feature that the output switch for controlling a large amount of current can be inexpensive. In addition, since thyristors do not have a movable contact, it is possible to provide effect that the power supply device can have high reliability and long life, and can be stably used.

A power supply device according to the present invention includes a battery 1, an output switch 2 that connects the battery 1 to a load 20 including a parallel capacitor 23, and a control circuit 3 that controls the output switch 2. The output switch 2 includes a main switch 9 that is connected in parallel to the precharge circuit 8 for precharging the parallel capacitor 23. In the power supply device, the precharge circuit 8 is a series circuit of a precharge resistor 12 and a thyristor 14, and the main switch 9 is a thyristor 14. The control circuit 3 turns the thyristor 14 of the precharge circuit 8 ON to precharge the parallel capacitor 23, and then turns the thyristor 14 of the main switch 9 ON.

In the power supply device, since both the precharge switch and the main switch are thyristors, the circuit can be simplified which controls ON/OFF of the thyristors. Therefore, it is possible to reduce component cost. In addition, since thyristors do not have a movable contact, it is possible to provide effect that the power supply device can have high reliability and long life, and can be stably used.

In the power supply device, the battery 1 is serially connected to a current cut-off switch 16. The control circuit 3 turns the main switch 9 and the current cut-off switch 16 ON so that the battery 1 is connected to the load 20.
In the power supply device, even if the thyristor cannot be turned OFF when the current does not flow through the load, the relay can be turned OFF so that the thyristor can be turned OFF. Thus, the battery can be reliably disconnected from the load. Therefore, it is possible to improve the safety of the power supply device.

In the power supply device, the battery 1 is serially connected to a service plug.
Also, in the power supply device, even if the thyristor cannot be turned OFF when the current does not flow through the load, the current flowing through the thyristor can be cut off by pulling out the service plug so that the thyristor can be turned OFF. Therefore, it is possible to improve the safety of the power supply device that employs the thyristor.

A vehicle according to the present invention includes the aforementioned power supply device.
This vehicle has a feature that the vehicle includes a simplified circuitry that precharges the parallel capacitor and then connects the battery to the load, but can be reliably used for a long time.

The above and further objects of the present invention as well as the features thereof will become more apparent from the following detailed description to be made in conjunction with the accompanying drawings.

### BRIEF DESCRIPTION OF THE DRAWINGS

Fig. 1 is a schematic view showing a vehicle power supply device according to an embodiment of the present invention;
Fig. 2 is a graph showing the relationship between the source-drain voltage and current of an FET in accordance with the gate voltage;
Fig. 3 is a schematic view showing a vehicle power supply device according to another embodiment of the present invention;
Fig. 4 is a schematic view showing a vehicle power supply device according to another embodiment of the present invention;
Fig. 5 is a schematic view showing a vehicle power supply device according to another embodiment of the present invention;
Fig. 6 is a schematic view showing a vehicle power supply device according to still another embodiment of the present invention;
Fig. 7 is a schematic view showing a vehicle including a vehicle power supply device according to an embodiment of the present invention;
Fig. 8 is a schematic view showing a vehicle including a vehicle power supply device according to another embodiment of the present invention; and
Fig. 9 is a block diagram a power storage type power supply device to which the present invention is applied.

### DETAILED DESCRIPTION OF THE EMBODIMENT(S)

The following description will describe embodiments according to the present invention with reference to the drawings.

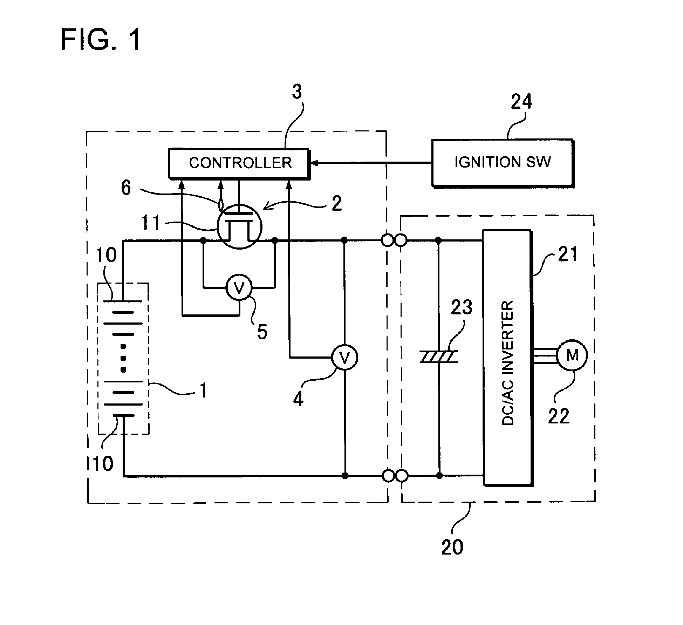

The vehicle power supply device shown in Fig. 1 is installed in a vehicle such as hybrid car, fuel-cell vehicle, and electric vehicle. The power supply device drives an electric motor 22 of a vehicle-side load 20 for vehicle running. The electric motor 22 of the vehicle-side load 20 is connected to a driving battery 1 through a DC/AC inverter 21. The DC/AC inverter 21 converts direct current from a vehicle-driving battery 1 into three-phase alternating current, and controls power supplied to the electric motor 22. The DC/AC inverter supplies electric power to the electric motor at increased voltage or without increasing voltage.

This illustrated power supply device includes an output switch 2 that connects the driving battery 1 to the vehicle-side load 20. The connection of output switch 2 is controlled by a control circuit 3. The control circuit 3 turns the output switch 2 ON so that the driving battery 1 is connected to the vehicle-side load 20, when the ignition switch 24 as main switch of the vehicle is turned ON.

The driving battery 1 powers the electric motor 22 for driving the vehicle via the DC/AC inverter 21. In order to supply a large amount of electric power to the electric motor 22, the driving battery 1 includes a number of the rechargeable battery cells 10 serially connected to each other. Thus, the output voltage of the driving battery 1 can be high. Lithium-ion rechargeable batteries or nickel-hydrogen batteries can be used as the battery cells 10. In the case the power supply device includes lithium ion batteries as the battery cells, a plurality of lithium ion batteries are serially connected to each other. In the case where the power supply device includes nickel-hydrogen batteries as the battery cells, the power supply device includes a plurality of battery modules each of which includes a plurality of nickel-hydrogen batteries serially connected to each other. The plurality of battery modules are serially connected to each other so that the output voltage of the driving battery is increased. However, the batteries of the power supply device according to the present invention are limited neither to lithium-ion rechargeable batteries nor nickel-hydrogen batteries. Any types of rechargeable batteries including nickel-cadmium batteries may be used as the batteries of the power supply device according to the present invention.

To supply a large amount of electric power to the electric motor 22, the output voltage of the driving battery 1 can be set at a value of 200 to 400 V, for example. However, the power supply device may increase the voltage of the battery and supply electric power at the increased voltage to the electric motor. In this power supply device, since the output voltage of the battery can be lower, the number of the serially-connected batteries can be reduced. Accordingly, the output voltage of this driving battery 1 can be set at a value of 150 to 400V, for example.

In the vehicle-side load 20, a parallel capacitor 23 is connected to the input side of the DC/AC inverter 21. The parallel capacitor 23 reduces the voltage variation of the driving battery 1 caused by the load variation of the electric motor 22. The parallel capacitor 23 with large capacitance can reduce the voltage variation caused by the load variation. In order to reduce the voltage variation of the driving battery 1, a capacitor with large capacitance of 3000 to 5000 µF is used as the parallel capacitor 23.

When the large-capacitance parallel capacitor 23 is connected to the driving battery 1 so that the parallel capacitor 23 starts being charged, a large amount of current momentarily flows. At this moment, the peak value of the charge current is very large which flows into the parallel capacitor 23. For this reason, in the vehicle power supply device, after the parallel capacitor 23 is precharged, the driving battery 1 is connected to the vehicle-side load 20 through the low resistance output switch 2.

In the vehicle power supply device shown in Fig. 1, a semiconductor switching element 11 is used as the output switch 2. The semiconductor switching element 11 has controllable electrical resistance in the ON state. This semiconductor switching element 11 is an FET. However, as this semiconductor switching element, a semiconductor switching element such as transistor and IGBT can be also used. The variation of the electrical resistance of FET or IGBT in the ON state can be controlled in accordance with a voltage provided to the gate of the FET or IGBT. In the case where the ON resistance of the semiconductor switching element can be controlled in accordance with the input voltage, it is possible to reduce the output electric power of the circuit, which controls the ON resistance. In particular, even a large-current semiconductor switching element can be controlled with a small amount of electric power. The variation of the electrical resistance of transistor in the ON state can be controlled in accordance with a current provided to the base of the transistor. The FET has small ON resistance. Accordingly, electric power of the driving battery can be efficiently supplied to the vehicle-side load. The ON resistance of IGBT can be controlled in accordance with the input voltage similarly to FET. Accordingly, the output electric power of the control circuit can be small. In addition, high-voltage resistance and large-current IGBTs are provided at relatively low cost as compared with high-voltage resistance and large-current FETs. For this reason, transistors can make large electric power devices inexpensive. The source and the drain of the FET are connected to the driving battery and the vehicle-side load, respectively, so that the driving battery can be connected to the vehicle-side load. The collectors and the emitters of the IGBT and the transistor are connected between the driving battery and the vehicle-side load so that the driving battery can be connected to the vehicle-side load.

The driving battery 1 is discharged and supplies electric power to the electric motor 22 of the vehicle-side load 20 to drive the electric motor 22 for vehicle running. On the other hand, the driving battery 1 can be charged with energy in vehicle braking. That is, the driving battery 1 can be charged by regenerative braking. In regenerative braking, an electric generator is rotated by the kinetic energy of the vehicle braking. The driving battery 1 can be charged with the electric power generated by the electric generator. The output switch 2 for charging/discharging the driving battery 1 is required to have the property that current can flow in a direction where the driving battery 1 is discharged by the current and in a direction where the driving battery 1 is charged by the current, in other words, current can flow in the both directions. Since FETs has a parasitic diode, current can flow through the FETs in the both directions. For this reason, the driving battery 1 can be charged/discharged through a single FET. The FET is connected to the driving battery 1 so that the driving battery 1 can be charged with current flowing through the parasitic diode. Since current can flow through in transistors or IGBTs only in one direction, a discharging transistor or discharging IGBT, and a charging transistor or charging IGBT are connected to each other in parallel so that charging/discharging operation is controlled.

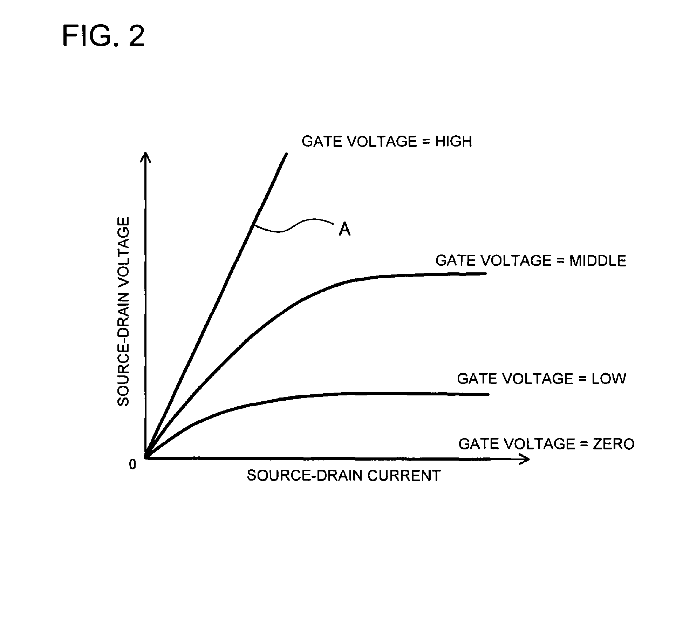

Fig. 2 shows the variation relationship between the source-drain voltage and current in the case of different gate voltages, in other words, shows variation of the ON resistance. The ON resistance (Ω) is defined by (the source-drain voltage (V))/(the source-drain current (I)). The ON resistance of FET can be controlled by the gate voltage. The ON resistance of the FET is small if the gate voltage is high, while The ON resistance of the FET is large if the gate voltage is low. The reason is that, as shown in Fig. 2, the source-drain current can be large if the gate voltage is high, while the source-drain current can be small if the gate voltage is low.

In the case where the parallel capacitor 23 is precharged, the ON resistance of the semiconductor switching element 11 of the output switch 2 is controlled large. After the precharging operation of the parallel capacitor 23 is completed, the ON resistance is controlled small so that the driving battery 1 is connected to the vehicle-side load 20 with the semiconductor switching element 11 being brought in a low resistance state. The ON resistance in precharging operation of the parallel capacitor 23 is specified by the precharge current of the parallel capacitor 23. For example, the ON resistance in the precharging operation is adjusted to an electrical resistance value corresponding to the parallel capacitor 23 precharge current of 20 to 50 A.

Since the FET has the property shown in Fig. 2, the gate voltage is set small so that the ON resistance is set large in the precharging operation of the parallel capacitor 23. Thus, the source-drain current can be limited. In particular, the FET has the property that, as shown in Fig. 2, in the case where the gate voltage is low, even when the source-drain voltage increases from a predetermined voltage, the source-drain current can be limited to a roughly constant value. This is very useful to precharge of the parallel capacitor 23. The reason is that the parallel capacitor 23 can be precharged with a constant amount of current by holding the gate voltage at a certain voltage.

When the parallel capacitor 23 with being fully discharged is charged, the source-drain voltage will be the highest value. The reason is that the source-drain voltage of FET will be the voltage difference between the voltage of the driving battery 1 and the voltage of the parallel capacitor 23 to be precharged. For this reason, when the driving battery 1 is connected to the parallel capacitor 23 the voltage of which is 0 V in the case where the parallel capacitor 23 is fully discharged, the source-drain voltage will be the highest value, which equals to the voltage of the driving battery 1. As the parallel capacitor 23 is charged so that the voltage of the parallel capacitor 23 increases, the source-drain voltage decreases. In this FET, in the case where the gate voltage is held at a certain value, the parallel capacitor 23 can be precharged with a limited constant amount of current until the voltage of the parallel capacitor 23 increases to a predetermined voltage value. As the voltage of the parallel capacitor 23 increases in the precharging operation of the parallel capacitor 23, the source-drain voltage will decrease so that the precharge current will gradually decrease. When the parallel capacitor 23 is precharged so that the voltage of the parallel capacitor 23 reaches the predetermined voltage value, the control circuit 3 set the gate voltage of the FET higher so that the ON resistance is set smaller.

In the case where the IGBT is used in the output switch, since the FET of the IGBT is connected to the input side of the battery, similar to the case where the aforementioned FET is used in as the output switch, when the parallel capacitor is precharged, the input voltage is set small so that the ON resistance is set large whereby limiting the precharge current. The ON resistance of the IGBT is adjusted to a limited value corresponding to the parallel capacitor precharge current of 20 to 50 A. When the parallel capacitor is precharged so that the voltage of the parallel capacitor reaches a predetermined voltage value, the input voltage is set higher so that the ON resistance of the IGBT is set smaller. Thus, the driving battery is connected to the vehicle-side load with IGBT being brought in a low resistance state.

In the case where the transistor is used in the output switch, since the ON resistance of the transistor is controlled by current, when the parallel capacitor is precharged, the base current is set small so that the ON resistance is set large whereby limiting the precharge current. The ON resistance of the transistor, which is controlled by the base current, is adjusted to a limited value corresponding to the parallel capacitor precharge current of 20 to 50 A. When the parallel capacitor is precharged so that the voltage of the parallel capacitor reaches a predetermined voltage value, the base current is set larger so that the ON resistance of the transistor is set smaller. Thus, the driving battery is connected to the vehicle-side load with transistor being brought in a low resistance state.

The control circuit 3 controls the semiconductor switching element 11 of the output switch 2. After the parallel capacitor 23 is precharged with the control circuit 3 controlling the semiconductor switching element 11, the driving battery 1 is connected to the vehicle-side load 20 in a low resistance electrically-conducted state. When the parallel capacitor 23 of the vehicle-side load 20 is precharged, the control circuit 3 controls the ON resistance of the semiconductor switching element 11 of the output switch 2 based on an ON signal provided from the ignition switch 24 as the main switch of the vehicle, in other words, the control circuit 3 sets the ON resistance in the precharging operation larger than the electrically-conducted state. The control circuit 3 sets the ON resistance of the semiconductor switching element 11 in the precharging operation of the parallel capacitor 23 larger than the ON resistance in the electrically-conducted state so that the precharge current is limited to a value of 20 to 50 A as discussed above, for example. When the control circuit 3 sets the ON resistance of the semiconductor switching element 11 large, the precharge current can be small.

The control circuit 3 holds the gate voltage of the FET as the output switch 2 at the certain voltage in the precharging operation of the parallel capacitor 23. In the thus-controlled FET, the ON resistance is the largest at the beginning of the precharging operation of the parallel capacitor 23. The ON resistance is gradually reduced as the parallel capacitor 23 is charged. In the precharging operation of the parallel capacitor 23 in which the FET is thus controlled by the control circuit 3, the parallel capacitor 23 can be quickly precharged with the peak value of precharge current being small.

However, the control circuit 3 can hold the ON resistance of the semiconductor switching element 11 constant in the precharging operation of the parallel capacitor 23. Alternatively, the control circuit 3 can change the ON resistance in a stepped manner in the precharging operation. Also, the control circuit 3 can detect the voltage of the parallel capacitor 23 by means of a voltage detecting circuit 4, and can control the ON resistance of the semiconductor switching element 11 in accordance with the detected voltage in the precharging operation of the parallel capacitor 23. In the case where the parallel capacitor voltage detected by the voltage detecting circuit 4 is small, the control circuit 3 controls the ON resistance smaller than in the case where the parallel capacitor voltage is large to more quickly precharge the parallel capacitor 23 that is not fully discharged. The voltage of the parallel capacitor 23 that is not fully discharged is not 0 V. The voltage can be small that is applied to the semiconductor switching element 11. For this reason, in this case, the ON resistance of the semiconductor switching element 11 can be set small so that the precharge current is set large. The reason is that the precharge current is proportional to the voltage of the semiconductor switching element 11 (i.e., the voltage difference between the parallel capacitor 23 and the driving battery 1), and is inversely proportional to the ON resistance. Accordingly, the parallel capacitor 23 that is not fully discharged can be more quickly precharged by setting the ON resistance of the semiconductor switching element 11 smaller.
In this case, even if the ON resistance of the semiconductor switching element 11 is set smaller, damage can be prevented which results from heat generated by the semiconductor switching element 11. The reason is that, since heat generated by the semiconductor switching element 11 is proportional to the product of the square of the current and the internal resistance of the semiconductor switching element 11, the heat generated by the semiconductor switching element 11 can be limited by limiting the current.

In addition, the control circuit 3 can detect the temperature of the semiconductor switching element 11 by means of a temperature detecting circuit 6, and can control the ON resistance in accordance with the detected temperature. When the parallel capacitor 23 of the vehicle-side load 20 is precharged, the control circuit 3 controls the ON resistance so that, in the case where the temperature of the semiconductor switching element 11 detected by the temperature detecting circuit 6 is high, the ON resistance is set larger than in the case where the detected temperature is low. In the case where the temperature of the semiconductor switching element 11 is high, if the parallel capacitor 23 is precharged with a large amount of precharge current with the ON resistance being set small, the amount of heat generated by the semiconductor switching element 11 will be large. The heat amount increases in proportion to the square of the precharge current. Since the control circuit 3 detects the temperature of the semiconductor switching element 11 and controls the ON resistance so that the ON resistance is set large if the temperature of the semiconductor switching element 11 is high, damage can be prevented which results from heat generated by the semiconductor switching element 11. The reason is that, since, if the high temperature of the semiconductor switching element 11 is high, the ON resistance of the semiconductor switching element 11 is set large so that the precharge current is set small, the amount of heat generated by the semiconductor switching element 11 can be reduced.

The output switch 2 is connected to the positive side of the driving battery 1 in the power supply device of Fig. 1. However, in the power supply device, although not illustrated, the output switch can be connected to the negative side of the driving battery.

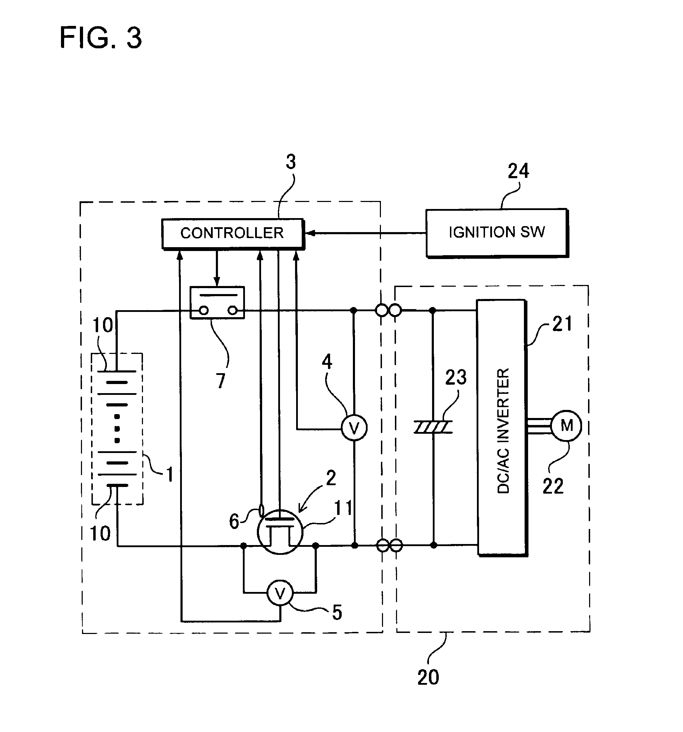

In a power supply device according to another embodiment shown in Fig. 3, the driving battery 1 is connected to the vehicle-side load 20 through the semiconductor switching element 11 of the output switch 2, and a relay 7. In this illustrated power supply device, the relay 7 and the semiconductor switching element 11 are serially connected to the positive and negative sides of the driving battery 1, respectively. In this power supply device, the relay 7 and the output switch 2 are serially connected to the driving battery 1, while the driving battery 1 is connected to the vehicle-side load 20 through the output switch 2 and the relay 7. Although the relay 7 is connected to the positive side and the semiconductor switching element 11 is connected to the negative side in the power supply device shown in Fig. 3, the semiconductor switching element may be connected to the positive side and the relay may be connected to the negative side. Also, the semiconductor switching element and the relay may be serially connected to the positive side of the driving battery, alternatively, the semiconductor switching element and the relay are serially connected to the negative side so that the driving battery is connected to the vehicle-side load.

In the case of the power supply device where the driving battery 1 is connected to the vehicle-side load 20 through the relay 7 and the semiconductor switching element 11, the semiconductor switching element 11 and the relay 7 are controlled by the control circuit 3. When detecting that the ignition switch 24 is turned ON, the control circuit 3 turns the relay 7 ON so that the parallel capacitor 23 is precharged through the semiconductor switching element 11. After that, the control circuit 3 controls the semiconductor switching element 11 so that the semiconductor switching element 11 is brought into the electrically-conducted state. In the case where the ignition switch 24 is turned OFF, after the semiconductor switching element 11 is turned OFF, the relay 7 is turned OFF. Alternatively, after the relay 7 is turned OFF, the semiconductor switching element 11 is turned OFF.

In case where the power supply device includes the semiconductor switching element 11 as the output switch 2, as shown in Figs. 1 and 3, the voltage between the both ends of the semiconductor switching element 11 is detected by the voltage detecting circuit 5 so that the current can be detected that flows through the driving battery 1. The reason is that the voltage between the both ends of the semiconductor switching element 11 in the electrically-conducted state varies in accordance with the current of the driving battery 1. The property line A shown in Fig. 2 corresponds to the property of FET as the semiconductor switching element 11 in the electrically-conducted state showing the relationship between the source-drain voltage and the source-drain current. Not only limited to this illustrated FET, but if the voltage of the semiconductor switching element 11 increases with the current flowing the semiconductor switching element 11 in the electrically-conducted state, when the voltage of the semiconductor switching element 11 is detected, the current can be calculated in accordance with the detected voltage. In the FET with the property that the voltage of the FET increases with the current flowing the FET as shown in Fig. 2, when the voltage of the FET is detected, the current can be calculated in accordance with the detected voltage by the use of the property line A.

In the case where the control circuit 3 can detect the current flowing through the semiconductor switching element 11, the control circuit 3 limits the current to a certain range by controlling the ON resistance of the semiconductor switching element 11 in the precharging operation of the parallel capacitor 23. After the precharging operation, the control circuit 3 brings the semiconductor switching element 11 into the electrically-conducted state. In addition, in the vehicle power supply device, the current of the driving battery 1 is detected, and the detected current is integrated to calculate the remaining capacity of the driving battery 1. The remaining capacity of the driving battery 1 can be calculated based on the current that is calculated based on the voltage of the semiconductor switching element 11. Additionally, an over-current of the driving battery 1 may be detected. If an over-current flows through the driving battery 1, the output switch 2 is turned OFF to cut off the over-current of the driving battery 1.

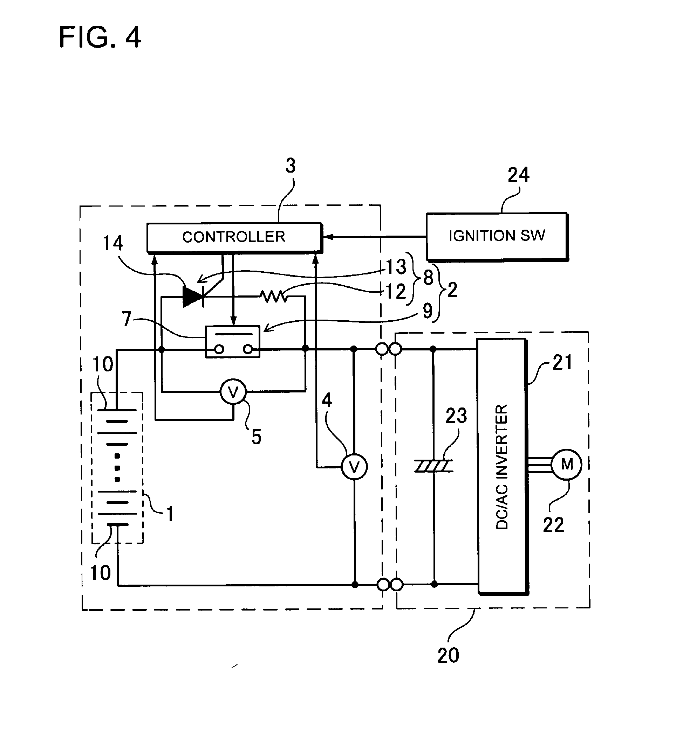

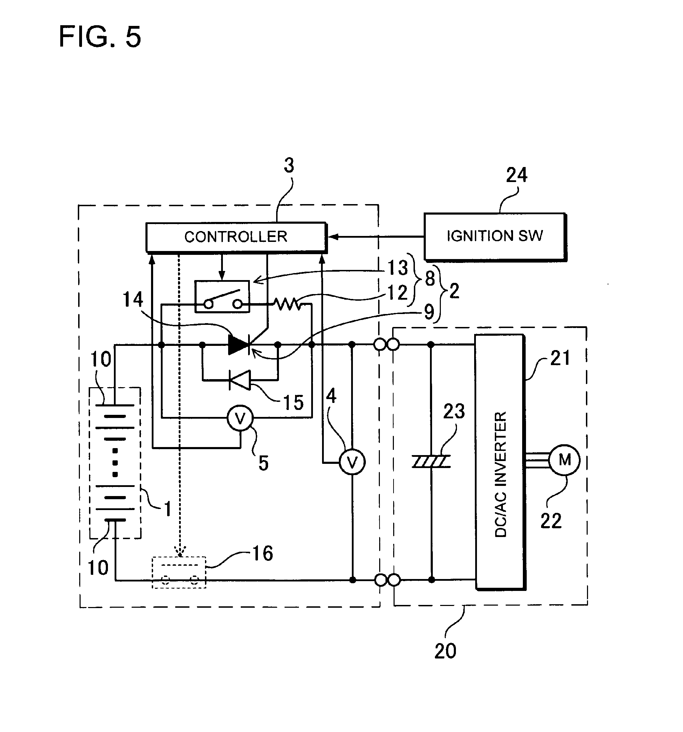

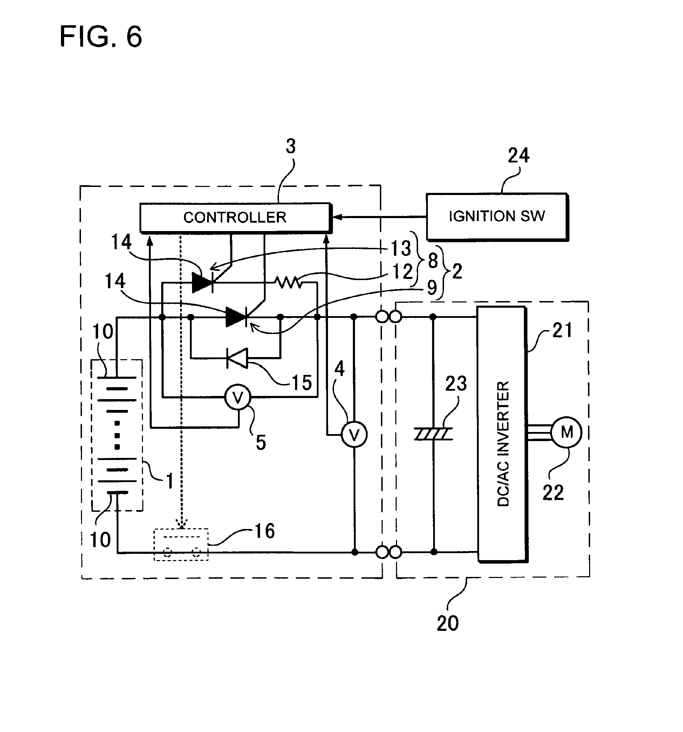

In vehicle power supply devices according to other embodiments shown in Figs. 4 to 6, the output switch 2 is a parallel circuit composed of a precharge circuit 8 and a main switch 9. The precharge circuit 8 precharges the parallel capacitor 23. The main switch 9 connects the driving battery 1 to the vehicle-side load 20, after the parallel capacitor 23 has been precharged. One of or both of the precharge circuit 8 and the main switch 9 are composed of a thyristor 14. In the power supply device shown in Fig. 4, the precharge circuit 8 is a series circuit composed of a precharge resistor 12 and the thyristor 14. In the power supply device of Fig. 5, the main switch 9 is composed of the thyristor 14. In the power supply device of Fig. 6, the precharge circuit 8 is a series circuit composed of the precharge resistor 12 and the thyristor 14, and the main switch 9 is composed the thyristor 14.

The precharge resistor 12 specifies the precharge current for precharging the parallel capacitor 23. For example, the precharge resistor 12 can have an electrical resistance of 10 Ω. In the case where the voltage of the driving battery 1 is 200 to 400V, the precharge circuit 8 limits the peak value of precharge current to 20 to 40 A when the parallel capacitor 23 is precharged.

When the trigger signal is provided into the gate of the thyristor 14, the thyristor 14 is turned ON. After that, if current flows through the thyristor 14, the thyristor 14 is held in the ON state. If the current stop flowing, the thyristor 14 is turned OFF. Dissimilar to FETs or transistors, the thyristor 14 does not require to continuously receive the control signal for holding the thyristor 14 in the ON state. The thyristor 14 can automatically turn OFF, if the current stop flowing. Accordingly, when the thyristor 14 employed in the precharge circuit 8 is turned ON, the parallel capacitor 23 will be precharged. After that, when the main switch 9 is turned ON, the current stops flowing through the thyristor 14 so that the thyristor 14 is turned OFF. The reason is that, when the main switch 9 is turned ON, the voltage between the both ends of the thyristor 14 will be 0 V so that the current will not flow through the thyristor 14.

Also, after the thyristor 14 used as the main switch 9 is turned ON by the trigger signal, when current stops flowing in the vehicle-side load 20, the thyristor 14 automatically turns OFF. Generally, the current does not constantly flow in the vehicle-side load 20. The current will flow in the vehicle-side load 20 only when the electric motor 22 is supplied with electric power. In case where the control circuit 3 controls the thyristor 14 of the main switch 9, if the ignition switch 24 is turned ON, the control circuit 3 starts providing the trigger signal to the gate of the thyristor 14 periodically at a constant period (e.g., 1 to 100 msec) so that electric power can be supplied from the driving battery 1 to the vehicle-side load 20. If the switching element of the DC/AC inverter 21 is brought in the ON state, when the thyristor 14 is turned ON, the vehicle-side load 20 can be supplied with electric power from the driving battery 1. In the case where the switching element of the DC/AC inverter 21 is turned ON periodically at a predetermined cycle so that electric power can be supplied from the driving battery 1 to the vehicle-side load 20, the thyristor 14 is held in the ON state so that electric power is supplied from the driving battery 1 to the vehicle-side load 20. When the ignition switch 24 is turned OFF, the control circuit 3 does not provide the trigger signal to the gate of the thyristor 14. After the ignition switch is turned OFF, since the current does not flow through the vehicle-side load 20, and the trigger signal is not provided to the gate of the thyristor 14, the thyristor 14 will turn OFF.

Current cannot flow through the thyristor 14 of the main switch 9 in the inverse direction. For this reason, the thyristor 14 of the main switch 9 is connected in a direction where the current can be supplied from the driving battery 1 to the vehicle-side load 20, in other words, in a direction where the driving battery 1 can be discharged, as shown in Figs. 5 and 6. This thyristor 14 does not allow current to flow in a direction where the driving battery 1 is discharged. In the main switch 9 shown in Figs. 5 and 6, a diode 15 is connected in parallel to the thyristor 14. This diode 15 allows current to flow in the direction where the driving battery 1 can be charged. The diode 15 constantly allows current to flow in this direction. For this reason, it is not necessary to control the diode 15. Accordingly, the driving battery 1 can be constantly charged by the vehicle-side load 20. However, the main switch, although not illustrated, may include a pair of thyristors that are connected in parallel in the both directions so that the charging/discharging operation of the driving battery can be controlled by means of the thyristors. In addition, the main switch may include a TRIAC, which can control current in the both directions, instead of the thyristor, so that the driving battery can be charged/discharged.

The following description describes operation in the power supply device that includes the thyristor 14 in the precharge circuit 8 as shown in Fig. 4.
(1) When detecting that the ignition switch 24 is turned ON, the control circuit 3 provides the trigger signal to the gate of the thyristor 14 so that the thyristor 14 is turned ON. In the case where the thyristor 14 is brought in the ON state, the parallel capacitor 23 is precharged via the precharge resistor 12. After the thyristor 14 composing the precharge circuit 8 starts the precharging operation when being provided with the trigger signal, the thyristor 14 is held in the ON state until the precharging operation of the parallel capacitor 23 is completed. Thus, this thyristor 14 is held in the ON state without repeated reception of the trigger signal until the precharging operation is completed.
(2) After the precharging operation of the parallel capacitor is completed, the control circuit 3 turns the main switch 9 ON so that the driving battery is connected to the vehicle-side load via the main switch 9. Thus, the thyristor 14 of the precharge circuit 8 will turn OFF.
The control circuit 3 detects the precharging operation of the parallel capacitor 23 by means of a timer that starts counting the time when the thyristor 14 of the precharge circuit 8 is turned ON. Alternatively, the control circuit 3 detects the precharging process by means of a current detecting circuit (not shown) that detects the precharge current.
(3) If the ignition switch 24 is turned OFF, the control circuit 3 turns the main switch 9 OFF so that the driving battery 1 is disconnected from the vehicle-side load 20.

The main switch 9 is the relay 7 or a semiconductor switching element. The main switch 9 of the relay 7 is turned ON/OFF by the control circuit 3. The main switch of the semiconductor switching element can be a FET, an IGBT, a transistor, or the like. The main switch of the semiconductor switching element is turned ON/OFF based on the input signal provided from the control circuit to the gate or the base of the semiconductor switching element.

The following description describes operation in the power supply device that includes the thyristor 14 used as the main switch 9 as shown in Fig. 5.
(1) When detecting that the ignition switch 24 is turned ON, the control circuit 3 turns the relay as the precharge switch 13 of the precharge circuit 8, and the semiconductor switching element ON. In the case where the precharge switch 13 is brought in the ON state, the parallel capacitor 23 is precharged via the precharge resistor 12.
(2) When the parallel capacitor 23 is precharged, the control circuit 3 provides the trigger signal to the gate of the thyristor 14 of the main switch 9 so that the thyristor 14 is turned ON. The control circuit 3 provides the trigger signal to the gate of the thyristor 14 periodically at a predetermined cycle so that the thyristor 14 can be brought in the ON state. The thyristor 14 in the ON state connects the driving battery 1 to the vehicle-side load 20. In the case where the thyristor 14 is brought in the ON state, electric power can be supplied from the driving battery 1 to the vehicle-side load 20. Also, in the case where the switching element (not shown) composing the DC/AC inverter 21 of the vehicle-side load 20 is brought in the ON state so that the electric motor 22 can be supplied with electric power, when the thyristor 14 is turned ON, electric power is supplied from the driving battery 1 to the vehicle-side load 20.
(3) When the ignition switch 24 is turned OFF, the control circuit 3 does not provide the trigger signal to the gate of the thyristor 14 so that the thyristor 14 will be turned OFF. In the case where the trigger signal is not provided to the gate of the thyristor 14, if the current stops flowing through the thyristor 14, the thyristor 14 will turn OFF. In the case where the switching element composing the DC/AC inverter 21 is held in the OFF state, the load current of the vehicle-side load 20 is cut off. In this case, since the current stops flowing through the thyristor 14, the thyristor 14 turns OFF if the trigger signal is not provided to the gate of the thyristor 14.

The following description describes operation in the power supply device that includes the thyristors 14 as the precharge switch 13 and the main switch 9.
(1) When detecting that the ignition switch 24 is turned ON, the control circuit 3 provides the trigger signal to the gates of the thyristors 14, which are the precharge switch 13 and the main switch 9, so that the thyristor 14 is turned ON. In the case where the thyristors 14 are brought in the ON state, the parallel capacitor 23 is precharged via the precharge resistor 12. After the thyristor 14 composing the precharge circuit 8 starts the precharging operation when being provided with the trigger signal, the thyristor 14 is held in the ON state until the precharging operation of the parallel capacitor 23 is completed. Thus, this thyristor 14 is held in the ON state without repeated reception of the trigger signal until the precharging operation is completed.
(2) When the parallel capacitor 23 is precharged, the control circuit 3 provides the trigger signal to the gate of the thyristor 14 as the main switch 9 so that this thyristor 14 is turned ON. The control circuit 3 provides the trigger signal to the gate of this thyristor 14 periodically at a predetermined cycle so that this thyristor 14 can be brought in the ON state. This thyristor 14 in the ON state connects the driving battery 1 to the vehicle-side load 20. In the case where this thyristor 14 is brought in the ON state, electric power can be supplied from the driving battery 1 to the vehicle-side load 20. Also, in the case where the switching element (not shown) composing the DC/AC inverter 21 of the vehicle-side load 20 is brought in the ON state so that the electric motor 22 can be supplied with electric power, when this thyristor 14 is turned ON, electric power is supplied from the driving battery 1 to the vehicle-side load 20.
(3) When the ignition switch 24 is turned OFF, the control circuit 3 does not provide the trigger signal to the gate of this thyristor 14 so that this thyristor 14 will be turned OFF. In the case where the trigger signal is not provided to the gate of this thyristor 14, if the load current stops flowing through this thyristor 14, this thyristor 14 will turn OFF. In the case where the switching element composing the DC/AC inverter 21 is brought in the OFF state, the current of the vehicle-side load 20 is cut off. In this case, this thyristor 14 turns OFF if the trigger signal is not provided to the gate of this thyristor 14.

In the vehicle power supply device that includes the thyristor 14 in the main switch 9, a current cut-off switch 16 is serially connected to the driving battery 1 as shown by the dashed line in Fig. 5 or 6. Therefore, the current cut-off switch can be reliably turned OFF. The current cut-off switch 16 is a semiconductor switching element (e.g., FET, IGBT, the transistor, etc.) or a relay. The current cut-off switch 16 is turned ON/OFF by the control circuit 3. This current cut-off switch 16 is brought in the ON state in the case where the ignition switch 24 brought in the ON state, and is brought in the OFF state in the case where the ignition switch 24 is brought in the OFF state. In the power supply device that includes the current cut-off switch 16 serially connected to the driving battery 1, the thyristor 14 of the main switch 9 can be reliably turned OFF. The reason is that even if the switching element of the DC/AC inverter 21 of the vehicle-side load 20 is brought in the ON state, the thyristor 14 can be turned OFF by cutting off negative terminal current. Also, in the power supply device that includes the current cut-off switch 16, since the current cut-off switch 16 can be turned OFF in abnormal conditions so that the output of the driving battery 1 is cut off, it is possible to improve the safety of the power supply device. In addition, even if the thyristor 14 of the main switch 9 melts and is fixed in the ON state, the driving battery 1 can be disconnected from the vehicle-side load 20 by turning the current cut-off switch 16 OFF.

In the vehicle power supply device, although not illustrated, the service plug may be connected to the driving battery in series. In this case, for example, the driving battery can be divided into a plurality of battery blocks so that service plugs are detachably inserted to the connection parts between the battery blocks for connecting the battery blocks to each other. Also, in this power supply device, if the thyristor cannot be turned OFF even when the current does not flow through the vehicle-side load, the current flowing through the thyristor can be cut off by pulling out the service plug so that the thyristor is turned OFF. Also, even in the power supply device that does not employ a thyristor as the main switch, in the case where the service plug is connected to the driving battery in series, the current can be cut off by pulling out the service plug in maintenance. Therefore, in this power supply device, it is possible to improve the safety.

The aforementioned power supply devices can be used as a power system for vehicles. The power supply device can be installed on electric vehicles such as hybrid cars that are driven by both an engine and a motor, and electric vehicles that are driven only by a motor.

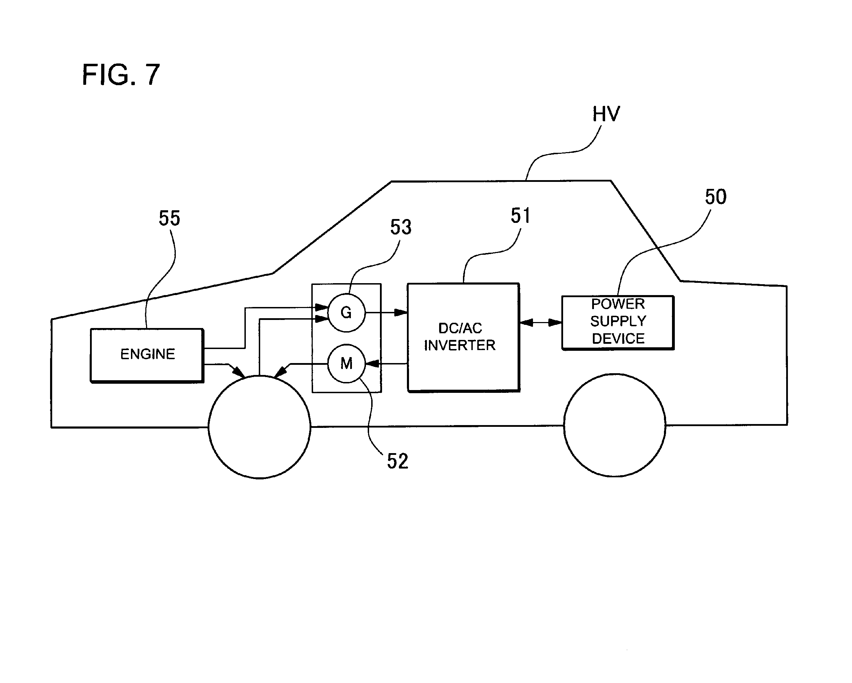

Fig. 7 is a block diagram showing an exemplary hybrid car that is driven both by an engine 55 and an electric motor 52, and includes the power supply device 50. The illustrated vehicle HV includes the electric motor 52 and the engine 55 that drive the vehicle HV, the power supply device 50 that supplies electric power to the electric motor 52, and an electric generator 53 that charges batteries of the power supply device 50. The power supply device 50 is connected to the electric motor 52 and the electric generator 53 via a DC/AC inverter 51. The vehicle HV is driven both by the electric motor 52 and the engine 55 with the batteries of the power supply device 50 being charged/discharged. The electric motor 52 is energized and drives the vehicle in a poor engine efficiency range, e.g., in acceleration or in a low speed range. The electric motor 52 is energized by electric power that is supplied from the power supply device 50. The electric generator 53 is driven by the engine 55 or by regenerative braking when users brake the vehicle so that the batteries of the power supply device 50 are charged.

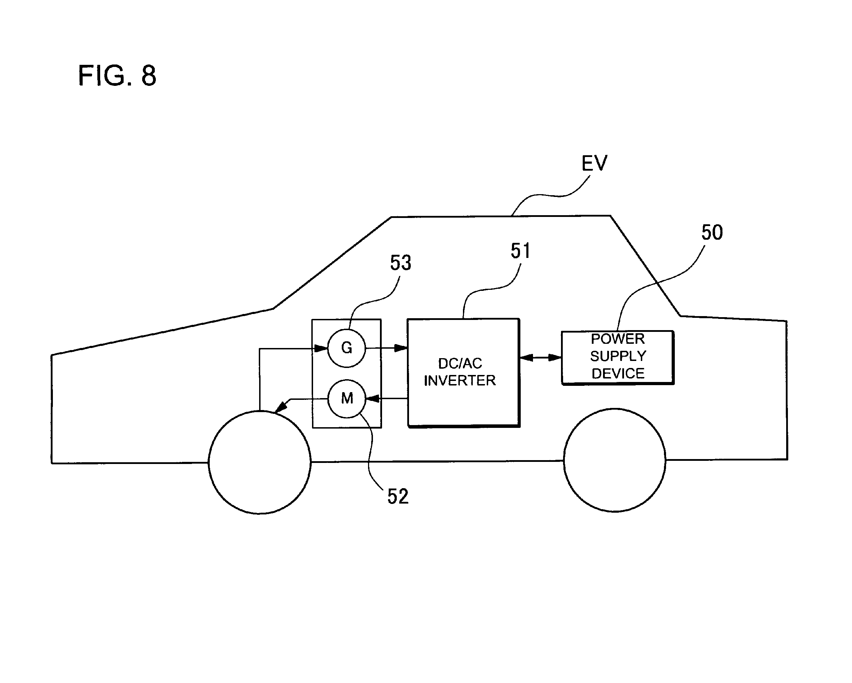

Fig. 8 shows an exemplary electric vehicle that is driven only by an electric motor 52, and includes the power supply device 50. The illustrated vehicle EV includes an electric motor 52 that drives the vehicle EV, the power supply device 50 that supplies electric power to the electric motor 52, and an electric generator 53 that charges batteries of the power supply device 50. The electric motor 52 is energized by electric power that is supplied from the power supply device 50. The electric generator 53 can be driven by vehicle EV regenerative braking so that the batteries of the power supply device 50 are charged.

### (Power Storage Type Power Supply Device)

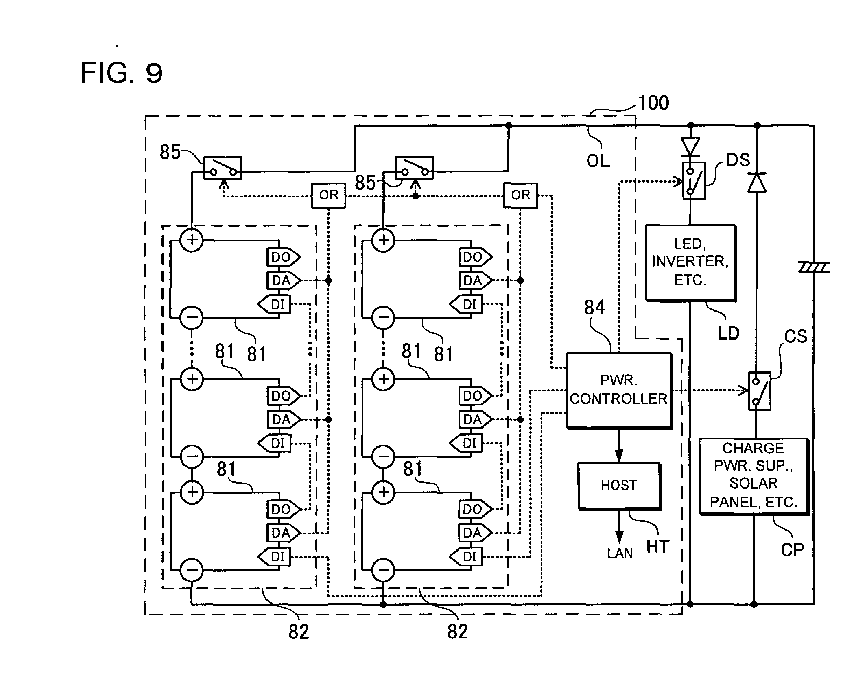

The power supply device can be used not only as power supply of mobile unit such as vehicle but also as stationary power storage. For example, examples of stationary power storage devices can be provided by an electric power system for home use or plant use that is charged with solar electric power or with midnight electric power and is discharged when necessary, a power supply for street lights that is charged with solar electric power during the daytime and is discharged during the nighttime, or a backup power supply for signal lights that drives signal lights in the event of a power failure. Fig. 9 shows a circuit diagram according to this embodiment. This illustrated power supply device 100 includes battery units 82 each of which includes a plurality of battery packs 81 that are connected to each other. In each of battery packs 81, a plurality of battery cells are connected to each other in serial and/or in parallel. The battery packs 81 are controlled by a power supply controller 84. In this power supply device 100, after the battery units 82 are charged by a charging power supply CP, the power supply device 100 drives a load LD. The power supply device 100 has a charging mode and a discharging mode. The Load LD and the charging power supply CP are connected to the power supply device 100 through a discharging switch DS and a charging switch CS, respectively. The discharging switch DS and the charging operation switch CS are turned ON/OFF by the power supply controller 84 of the power supply device 100. In the charging mode, the power supply controller 84 turns charging operation switch CS ON, and turns the discharging switch DS OFF so that the power supply device 100 can be charged by the charging power supply CP. When the charging operation is completed so that the battery units are fully charged or when the battery units are charged to a capacity not lower than a predetermined value, if the load LD requests electric power, the power supply controller 84 turns the charging operation switch CS OFF, and turns the discharging switch DS ON. Thus, operation is switched from the charging mode to the discharging mode so that the power supply device 100 can be discharged to supply power to the load LD. In addition, if necessary, the charging operation switch CS may be turned ON, while the discharging switch DS may be turned ON so that the load LD can be supplied with electric power while the power supply device 100 can be charged.

The load LD driven by the power supply device 100 is connected to the power supply device 100 through the discharging switch DS. In the discharging mode of the power supply device 100, the power supply controller 84 turns the discharging switch DS ON so that the power supply device 100 is connected to the load LD. Thus, the load LD is driven with electric power from the power supply device 100. Switching elements such as FET can be used as the discharging switch DS. The discharging switch DS is turned ON/OFF by the power supply controller 84 of the power supply device 100. The power supply controller 84 includes a communication interface for communicating with an external device. In the power supply device according to the embodiment shown in Fig. 9, the power supply controller is connected to a host device HT based on existing communications protocols such as UART and RS-232C. Also, the power supply device may include a user interface that allows users to operate the electric power system if necessary. Each of the battery packs 81 includes signal terminals and power supply terminals. The signal terminals include a pack input/output terminal DI, a pack abnormality output terminal DA, and a pack connection terminal DO. The pack input/output terminal DI serves as a terminal for providing/receiving signals to/from other battery packs and the power supply controller 84. The pack connection terminal DO serves as a terminal for providing/receiving signals to/from other battery packs as slave packs. The pack abnormality output terminal DA serves as a terminal for providing an abnormality signal of the battery pack to the outside. Also, the power supply terminal is a terminal for connecting one of the battery packs 81 to another battery pack in series or in parallel. In addition, the battery units 82 are connected to an output line OL through parallel connection switched 85, and are connected in parallel to each other.

### INDUSTRIAL APPLICABILITY

A power supply device according to the present invention can be suitably used as vehicle power supply device for electric vehicles and hybrid cars. Also, the present invention can be suitably applied to power supply devices other than vehicle power supply device.
It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims.

## Claims

1. A power supply device comprising:
a battery (1);
an output switch (2) that connects said battery (1) to a load (20) including a parallel capacitor (23); and
a control circuit (3) that controls said output switch (2),
**characterized in that**
said output switch (2) is a semiconductor switching element (11) having controllable ON resistance, wherein the ON resistance of said semiconductor switching element (11) is controlled by said control circuit (3) so that the ON resistance in a precharge state is set larger than the ON resistance in an electrically-conducted state the parallel capacitor (23) of the load (20) being precharged in the precharge state, wherein after the parallel capacitor (23) of the load (20) is precharged, the load (20) is supplied with electric power from the battery (1) with said semiconductor switching element (11) being brought into the electrically-conducted state in which the ON resistance of said semiconductor switching element (11) is smaller than the precharge state.

2. The power supply device according to claim 1, wherein said semiconductor switching element (11) is an element that allows current to flow in directions that the electric power is supplied from the battery (1) to the load (20) and from the load (20) to the battery (1) in the electrically-conducted state.

3. The power supply device according to Claim 1 or 2, wherein said control circuit (3) changes the ON resistance of the semiconductor switching element (11) continuously or in a stepped manner when the parallel capacitor (23) of the load (20) is precharged.

4. The power supply device according to claim 3, wherein said control circuit (3) gradually reduces the ON resistance of the semiconductor switching element (11) when the parallel capacitor (23) of the load (20) is precharged.

5. The power supply device according to any of Claims 1 to 4, wherein said control circuit (3) includes a voltage detecting circuit (4) that detects the voltage of the parallel capacitor (23) of the load (20), wherein the ON resistance of the semiconductor switching element (11) is controlled based on the parallel capacitor voltage detected by said voltage detecting circuit (4).

6. The power supply device according to claim 5, wherein in the case where the parallel capacitor voltage detected by said voltage detecting circuit (4) is low, the ON resistance is controlled smaller than in the case where the parallel capacitor voltage is high.

7. The power supply device according to any of Claims 1 to 6, wherein said control circuit (3) includes a temperature detecting circuit (6) that detects the temperature of the semiconductor switching element (11), wherein when the parallel capacitor (23) of the load (20) is precharged, said control circuit (3) controls the ON resistance so that, in the case where the temperature detected by the temperature detecting circuit (6) is high, the ON resistance is set larger than in the case where the detected temperature is low.

8. The power supply device according to any of Claims 1 to 7, wherein the semiconductor switching element (11) and the relay (7) are connected to the output side of said battery (1), wherein when the battery (1) is connected to the load (20), said control circuit (3) turns the semiconductor switching element (11) ON with the relay (7) being brought in the ON state.

9. The power supply device according to claim 8, wherein said semiconductor switching element is connected to the negative side of the battery (1), and said relay (7) is connected to the positive side of the battery (1).

10. The power supply device according to claim 8, wherein said semiconductor switching element (11) is connected to the positive side of the battery (1), and said relay (7) is connected to the negative side of the battery (1).

11. The power supply device according to claim 1, wherein said output switch (2) includes a main switch (9) that is connected in parallel to the precharge circuit (8) for precharging the parallel capacitor (23), wherein
said precharge circuit (8) is a series circuit of a precharge resistor (12) and a thyristor (14), wherein said control circuit (3) turns the thyristor (14) ON to precharge the parallel capacitor (23), and then turns the main switch (9) ON.

12. The power supply device according to claim 1, wherein said output switch (2) includes a main switch (9) that is connected in parallel to the precharge circuit (8) for precharging the parallel capacitor (23), wherein
said precharge circuit (8) is a series circuit of a precharge resistor (12) and a precharge switch (13), and said main switch (9) is a thyristor (14).

13. The power supply device according to claim 1, wherein said output switch (2) includes a main switch (9) that is connected in parallel to the precharge circuit (8) for precharging the parallel capacitor (23), wherein said precharge circuit (8) is a series circuit of a precharge resistor (12) and a thyristor (14), and said main switch (9) is a thyristor (14), wherein said control circuit (3) turns the thyristor (14) ON to precharge the parallel capacitor (23), and then turns the thyristor (14) of the main switch (9) ON.

14. The power supply device according to any of Claims 11 to 13, wherein said battery (1) is serially connected to a current cut-off switch (16), wherein said control circuit (3) turns the main switch (9) and the current cut-off switch (16) ON so that the battery (1) is connected to the load (20).

15. The power supply device according to any of Claims 11 to 13, wherein said battery (1) is serially connected to a service plug.
